# FASCICULE DE BREVET EUROPEEN

(11) **EP 3 266 011 B1**
(45) Date de publication et mention de la délivrance du brevet: **06.11.2019**
(21) Numéro de dépôt: 16715345.1
(22) Date de dépôt: 02.03.2016
(51) Int. Cl.: G08C 17/02

(54) **SYSTÈME DE TRANSMISSION DE COMMANDES ET D'UN FLUX VIDÉO ENTRE UN ENGIN TÉLÉ-PILOTÉ TEL QU'UN DRONE ET UNE STATION AU SOL**
SYSTEM ZUR ÜBERTRAGUNG VON BEFEHLEN UND EINES VIDEOSTROMS ZWISCHEN EINER FERNGESTEUERTEN MASCHINE WIE EINER DROHNE UND EINER BODENSTATION
SYSTEM FOR TRANSMITTING COMMANDS AND A VIDEO STREAM BETWEEN A REMOTE CONTROLLED MACHINE SUCH AS A DRONE AND A GROUND STATION

(30) Priorité: 02.03.2015 FR 1551755
(43) Date de publication de la demande: 10.01.2018
(73) Titulaire: Uavia, 91000 Evry (FR)
(72) Inventeur: CHRISTOMANOS, Clément, 75011 Paris (FR)
(74) Mandataire: Le Forestier, Eric
(86) Numéro de dépôt international: PCT/IB2016/051184
(87) Numéro de publication internationale: WO 2016/139604

(56) Documents cités:
- EP-A1- 2 450 862
- US-B1- 6 868 314

## Description

### Domaine de l'invention

La présente invention concerne la transmission d'ordres de pilotage et de flux vidéo entre un drone, c'est-à-dire un aéronef télé-piloté ou autonome de type quelconque, et un opérateur au sol.

Parmi les types de drones actuellement existants, on peut citer les drones à voilure tournante tels que les hélicoptères, quadricoptères et analogues. On peut également citer les drones à voilure fixe, propulsés par un ou plusieurs moteurs thermiques ou électriques.

Plus particulièrement, la présente invention concerne le domaine de la transmission entre un drone et son opérateur. Les drones sont télé-pilotés, c'est-à-dire qu'il existe une liaison à distance entre l'opérateur et le drone. L'opérateur peut ainsi envoyer des ordres de pilotage au drone, concernant par exemple la position géographique du drone ou l'opération à distance de systèmes embarqués. Un lien dans le sens retour existe également, afin de permettre d'une part au drone de transmettre des informations liées au vol ou à la mission (altitude, vitesse, position géographique...) et d'autre part de permettre au drone d'envoyer vers l'opérateur un flux vidéo, lequel est issu d'une caméra embarquée.

Ce flux vidéo est indispensable au pilotage de la machine ou à l'accomplissement des missions, par exemple pour une mission de surveillance. Le flux vidéo permet notamment un pilotage dit « immersif » : l'opérateur, au lieu de piloter le drone en regardant celui-ci, utilise la liaison vidéo pour le piloter, comme s'il se trouvait à bord du drone.

### Etat de la technique

On trouve plusieurs techniques dans l'état de l'art actuel permettant de transmettre au drone des ordres de pilotage, et permettant au drone de transmettre à son opérateur un flux d'informations ainsi qu'un flux vidéo.

Parmi ces techniques, la plus répandue est l'utilisation de liens de type radio hertzienne, technique notamment utilisée en aéromodélisme. L'opérateur comme le drone possèdent un système d'émission/réception radio. Un protocole spécifique permet le codage, le décodage et la transmission des données ou de la vidéo. L'utilisation de cette technique possède cependant d'importants inconvénients. Premièrement, l'utilisation du spectre de radiofréquences est soumise à la régulation d'autorités locales ou étatiques. Ainsi, le système ne peut transmettre que sur des bandes de fréquences pour lesquelles une autorisation a été obtenue, ou sur des bandes de fréquences laissées libres à l'usage par le public. Deuxièmement, la transmission des ondes radio en espace libre possède des limites intrinsèques, liées à la physique. L'atténuation naturelle des ondes radio ainsi que la présence d'obstacles (phénomènes de multi-trajets) diminue la qualité de la transmission jusqu'à une distance à laquelle la liaison est inutilisable. On appelle généralement cette distance la portée d'utilisation de la liaison. Actuellement, des liaisons radio pour drones permettent des portées d'utilisation maximales de l'ordre de 60 km, cette donnée étant fortement variable suivant la topographie du terrain ou les conditions atmosphériques.

Une autre technique couramment utilisée est la liaison radio de type satellitaire. Un satellite en orbite autour de la Terre est utilisé comme relais de transmission entre le drone et son opérateur. Cette technique permet des portées d'utilisation bien plus grandes mais les systèmes d'émission et de réception peuvent être encombrants, coûteux et complexes à l'utilisation, notamment au vu des problèmes causés par la latence, c'est à dire le temps de trajet de l'information.

Une autre technique encore utilise une liaison de type réseau local Wi-Fi (marque déposée) ou Bluetooth (marque déposée). Un réseau Wi-Fi permet de relier sans fil plusieurs appareils informatiques au sein d'un réseau afin de permettre la transmission de données entre eux. De tels réseaux sont des implémentations des normes IEEE 802.11. Une telle liaison peut être utilisée pour permettre la communication bidirectionnelle entre le drone et son opérateur. Ces techniques possèdent des portées d'utilisation très limitées, de l'ordre de 100 m pour le Wi-Fi.

Un exemple typique d'un drone utilisant des techniques de télécommunications Wi-Fi ou Bluetooth est le AR.Drone® de Parrot SA, Paris, France. La demande de brevet européen EP 2 450 862 A1 décrit un « Procédé de transmission de commandes et d'un flux vidéo entre un drone et une télécommande par une liaison de type réseau sans fil » utilisant les techniques Wi-Fi ou Bluetooth.

### Résumé de l'invention

L'état de l'art actuel ne propose donc pas de technique permettant le pilotage d'un drone sur des distances importantes, typiquement de plusieurs centaines de kilomètres, de manière efficace et économiquement avantageuse. La présente invention se propose de résoudre ce problème en permettant le pilotage d'un drone et la transmission d'un flux vidéo sur des distances potentiellement illimitées, dans la limite de la couverture géographique en réseau mobile.

On propose ainsi selon l'invention un système de transmission de commandes et d'un flux vidéo entre un engin télé-piloté tel qu'un drone et une station au sol, caractérisé en ce qu'il comprend une liaison bidirectionnelle entre engin et station au sol, mettant au moins en partie en œuvre un réseau de communication cellulaire, ladite liaison bidirectionnelle étant assurée au moyen d'un modem cellulaire côté engin et véhiculant d'une part un flux vidéo compressé engendré par une caméra et un module d'encodage vidéo, et d'autre part des informations appartenant à un groupe comprenant des ordres de commande de déplacement et des données de vol ou caractéristiques du pilotage de l'engin télé-piloté, le système comprenant an outre des moyens de gestion de la liaison bidirectionnelle aptes à assurer un maintien de ladite liaison en tenant compte de la variabilité de topologie et de performances de la liaison induite par la mise en œuvre du réseau de communication cellulaire.

Ce système peut comprendre avantageusement mais facultativement les caractéristiques additionnelles suivantes, prises en toutes combinaisons que l'homme du métier appréhendera comme étant techniquement compatibles :
* l'engin et la station au sol communiquent sur la liaison bidirectionnelle via un protocole par paquets.
* les moyens de gestion de la liaison sont aptes à réaliser une adaptation du débit binaire du flux vidéo compressé par ajustement des paramètres d'encodage du flux vidéo en fonction d'une mesure de la bande passante de la liaison bidirectionnelle de l'engin vers la station.
* en l'absence d'une mesure fiable de la bande passante, ladite adaptation est réalisée en faisant varier de façon répétée les paramètres d'encodage pour augmenter progressivement le débit binaire du flux vidéo compressé et en ajustant les paramètres d'encodage pour obtenir un débit binaire légèrement inférieur à un débit qui causerait un phénomène de congestion.
* ladite adaptation est réalisée en réservant une portion incompressible de la bande passante disponible à l'acheminement d'informations critiques.
* les informations critiques appartiennent à un groupe comprenant des données de vol, des caractéristiques du pilotage de l'engin télé-piloté et des ordres de pilotage ou de mission.
* lesdits moyens de gestion de la liaison sont aptes à calculer une note de qualité de la liaison bidirectionnelle au moins de la station vers l'engin, et neutraliser des instructions de vol reçues dans le cas où ladite note est inférieure à un seuil.
* ladite note est établie en fonction d'au moins deux mesures de caractéristiques de la liaison parmi la latence, le taux de paquets reçus dans le désordre, le taux de paquets non reçus et le taux de paquets et le taux de paquets reçus non intègres.
* lesdits moyens de gestion de la liaison bidirectionnelle comprennent la mise en œuvre d'un moins un protocole d'établissement de session et d'au moins un protocole de traversée ou de contournement de NAT.
* les moyens de gestion de la liaison sont aptes à inclure dans les messages du protocole d'établissement de session des informations relatives au type de point connecté, à savoir engin ou station au sol.
* les moyens de gestion de la liaison sont aptes à inclure dans les messages du protocole d'établissement de session des informations relatives à des droits d'une station au sol sur un engin.
* lesdits droits comprennent des droits de commande du déplacement de l'engin et des droits de commande de la caméra de l'engin.

On propose selon un deuxième aspect un ensemble d'un engin télé-piloté tel qu'un drone et d'une station au sol, caractérisé en ce qu'il comprend un système de transmission tel que défini ci-dessus.

Dans une forme de réalisation, cet ensemble comprend en outre au moins une deuxième station au sol, une deuxième liaison bidirectionnelle entre engin et station au sol, mettant au moins en partie en œuvre un réseau de communication cellulaire, et des deuxièmes moyens de gestion de la deuxième liaison bidirectionnelle entre la deuxième station au sol et l'engin.

Des aspects préférés mais facultatifs d'un tel ensemble sont les suivants :
* les premiers et deuxièmes moyens de gestion des liaisons bidirectionnelles sont aptes à véhiculer des informations de droits respectifs des deux stations au sol vis-à-vis dudit engin.
* les premiers et deuxièmes moyens de gestion des liaisons bidirectionnelles sont aptes à router des instructions critiques du sol vers l'engin via la première liaison bidirectionnelle ou la deuxième liaison bidirectionnelle en fonction d'un type de criticité, à savoir criticité temporelle ou criticité d'acheminement.

Un autre aspect de l'invention est un procédé de transmission de commandes et d'un flux vidéo entre un engin télé-piloté tel qu'un drone et une station au sol, caractérisé en ce qu'il met en œuvre une liaison bidirectionnelle mettant au moins en partie en œuvre un réseau de communication téléphonique cellulaire, ladite liaison bidirectionnelle étant assurée au moyen d'un modem cellulaire côté engin et véhiculant un flux vidéo compressé engendré par une caméra et des moyens d'encodage vidéo, et au moins l'un parmi des ordres de pilotage ou de mission et des données de vol ou caractéristiques du pilotage de l'engin télé-piloté.

Préférentiellement mais facultativement, dans ce procédé :
* l'engin et la station au sol communiquent sur la liaison bidirectionnelle via un protocole Internet.
* une adaptation du débit binaire du flux vidéo compressé est obtenue par modulation du taux de compression du flux vidéo capté par la caméra.
* ladite adaptation est réalisée en forçant, dans le cas où une mesure fiable de la marge de bande passante disponible est impossible, une augmentation du débit binaire du flux vidéo compressé ou une augmentation de la définition du flux vidéo compressé, cette augmentation forcée étant répétée à intervalles de temps réguliers, de manière à amener une consigne des paramètres d'encodage juste en dessous du niveau auquel la transmission du flux vidéo possédant ces paramètres causerait un phénomène de congestion.

* ladite adaptation est réalisée tout en réservant une portion de la bande passante disponible, laquelle portion est incompressible et réservée à l'acheminement d'informations critiques telles que les données de vol ou caractéristiques du pilotage de l'engin télé-piloté ou à l'acheminement d'informations critiques telles que les ordres de pilotage ou de mission.
* le procédé comprend en outre une transmission, dans la partie descendante (engin vers station) de la liaison bidirectionnelle, de données de vol ou caractéristiques du pilotage de l'engin télé-piloté à débit binaire constant.
* les ordres de mission ou de pilotage sont émis à intervalles de temps constants et sur action de l'opérateur qui décide un changement des paramètres de la mission dont l'exécution est en cours, ces paramètres pouvant concerner au moins l'un parmi la position géographique de l'engin télé-piloté, sa vitesse, sa destination, ses angles caractéristiques de lacet, de tangage et de roulis, son cap, l'utilisation d'un capteur ou d'un actionneur spécifique tel que l'orientation d'une caméra.
* le flux vidéo est reçu par la station et décodé par l'intermédiaire d'une interface, laquelle est constituée par une page internet consultée par l'opérateur dans un navigateur internet, page permettant le contrôle de l'engin télé-piloté et la visualisation de paramètres propres à son opération tels que, de manière non limitative, sa position géographique, sa vitesse, sa destination, ses angles caractéristiques, ou d'autres informations issues de capteurs embarqués.
* des capteurs sont embarqués à bord de l'engin télé-piloté afin de réaliser diverses missions telles que, à titre d'exemple non limitatif, des missions d'imagerie en champ visible ou infrarouge, des missions de cartographie en deux ou trois dimensions ou divers relevés de paramètres issus de capteurs présents à bord. Ce procédé est caractérisé en ce que la connectivité de l'engin télé-piloté au réseau Internet lui permet de stocker ces données sur un serveur distant ou de les fournir en temps-réel à l'opérateur par l'intermédiaire d'une interface.

Selon un autre aspect encore, il est proposé un ensemble d'un engin télé-piloté tel qu'un drone et d'une station au sol, caractérisé en ce qu'il comprend des moyens pour la mise en œuvre du procédé tel que défini ci-dessus et des moyens pour émettre des paquets de contrôle et/ou de statistiques et dans le but d'analyser la qualité de la liaison bidirectionnelle dans au moins l'une de ses directions ou dans les deux directions simultanément, de manière à moduler les paramètres d'encodage vidéo dans le sens d'une réduction du débit binaire du flux vidéo compressé ou d'une réduction de la définition du flux vidéo compressé lorsqu'il est détecté que la bande passante disponible sur la liaison ne permet pas l'acheminement des flux d'information sans phénomènes de congestion, de perte de paquets ou sans latence excessive, et dans le sens d'une augmentation du débit binaire du flux vidéo compressé ou d'une augmentation de la définition du flux vidéo compressé lorsque la bande passante disponible n'est pas intégralement utilisée et que l'augmentation de la définition du flux vidéo compressé est susceptible de représenter une amélioration de l'expérience utilisateur.

### Brève description des dessins

On va maintenant décrire la mise en œuvre de l'invention, en référence aux dessins annexés où les mêmes références numériques désignent d'une figure à l'autre des éléments identiques ou fonctionnellement semblables. Sur les dessins :
- la Figure 1 illustre l'architecture d'ensemble de l'invention,
- la Figure 2 illustre les principaux échanges de données entre un engin et une station au sol dans cette architecture,
- la Figure 3 illustre ces mêmes échanges en liaison avec des schémas blocs des éléments principaux de l'électronique de l'engin et de l'électronique de la station au sol, et
- la Figure 4 illustre schématiquement les éléments mis en œuvre dans la détermination des paramètres d'un encodage vidéo réalisé au niveau de l'engin.

### Description détaillée d'une forme de réalisation

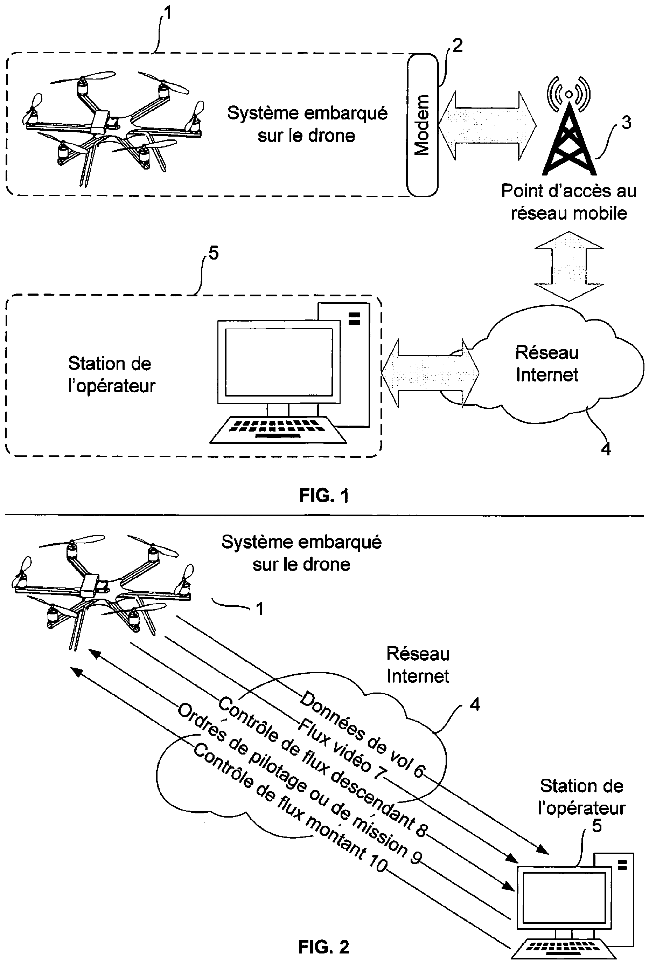

Le système selon la présente invention comporte, selon le schéma présenté en Figure 1, deux sous-systèmes, le premier étant embarqué sur un drone 1, le second étant une station 5 pour un opérateur au sol, celle-ci pouvant prendre une forme quelconque telle qu'un ordinateur, portable ou non, un terminal mobile ou tout autre système à même de réaliser l'interface.

Les deux systèmes sont reliés au moyen du réseau Internet 4, avec la particularité notable que le système embarqué sur le drone utilise, pour obtenir une connectivité Internet, les réseaux cellulaires de télécommunications commerciaux 3 utilisant les technologies couramment appelées 2G, 3G, 3G+, H+, 4G, LTE, LTE-Advanced, 5G, WiMAX ou autres. Le système au sol 5 permettant l'opération du drone peut être relié au réseau Internet 4 par différents moyens, qu'il s'agisse d'une connexion Internet classique, par le réseau téléphonique, par un réseau de type sans fil, ou par les réseaux mobiles de télécommunications précités.

La Figure 2 présente les différents flux transmis par l'intermédiaire du réseau Internet 4 entre le système embarqué sur le drone 1 et la station de l'opérateur 5.

Les moyens de communication tels qu'on va les décrite permettent de prendre en compte est la grande variabilité de la capacité du canal liant les deux systèmes. En effet, le drone 1 est mobile et connecté à Internet par les réseaux mobiles de télécommunications, de type cellulaire. De ce fait, il est possible qu'au cours de son vol, le drone change de point d'accès au réseau 3. Ces points d'accès sont partagés par plusieurs utilisateurs du réseau et la capacité totale est donc partagée entre les utilisateurs. Ainsi, en fonction des différentes charges en utilisateurs des points d'accès au réseau mobile de télécommunications, et en fonction du chemin calculé sur le réseau Internet 4 pour l'acheminement des données et de la charge en utilisateurs des différents équipements traversés sur ce chemin, la capacité du réseau à faire transiter l'information, plus couramment appelée bande passante disponible, est très fortement variable. De plus, en fonction des technologies utilisées au niveau du point d'accès au réseau mobile, qu'il s'agisse de la 2G, 3G, 3G+, H+, 4G, LTE, LTE-Advanced, 5G, WiMAX ou autres, les débits montants et descendants disponibles peuvent être sensiblement différents.

Afin de garantir l'acheminement de l'information à travers ce canal sur le réseau, il est nécessaire de respecter la limite imposée par la bande passante disponible. En effet, si l'envoi des données s'effectue à un débit supérieur à la capacité du canal, il apparaît un phénomène de congestion : le réseau ne peut transmettre instantanément l'information et se trouve donc forcé de la stocker temporairement afin de la retransmettre après un court intervalle de temps. Ce phénomène ralentit donc la progression de l'information au sein du réseau. De plus, en cas de congestion importante, les équipements situés sur le réseau sont susceptibles de détruire des données dans le cas où ils seraient dans l'incapacité de les transmettre. Ces phénomènes induisent donc de la latence, c'est-à-dire que le temps de transport de l'information augmente, ainsi que de la perte de paquets (« packet loss » en terminologie anglo-saxonne). Or le pilotage à distance d'une machine telle qu'un drone exige un temps de latence très faible (on considère qu'au-delà de 200 millisecondes, le système deviendrait inconfortable à l'utilisation) ainsi qu'une retransmission vidéo de qualité. En ce qui concerne la retransmission vidéo, il est nécessaire, pour une utilisation confortable, d'avoir un nombre d'images par seconde très peu variable. Ainsi, le phénomène de congestion doit à tout prix être évité.

Selon un aspect de l'invention, le système mesure périodiquement la capacité du lien réseau, c'est-à-dire le débit binaire auquel on peut transmettre de l'information sans provoquer de phénomène de congestion, et adapte les transmissions de données à cette contrainte de débit par un mécanisme de contrôle de flux.

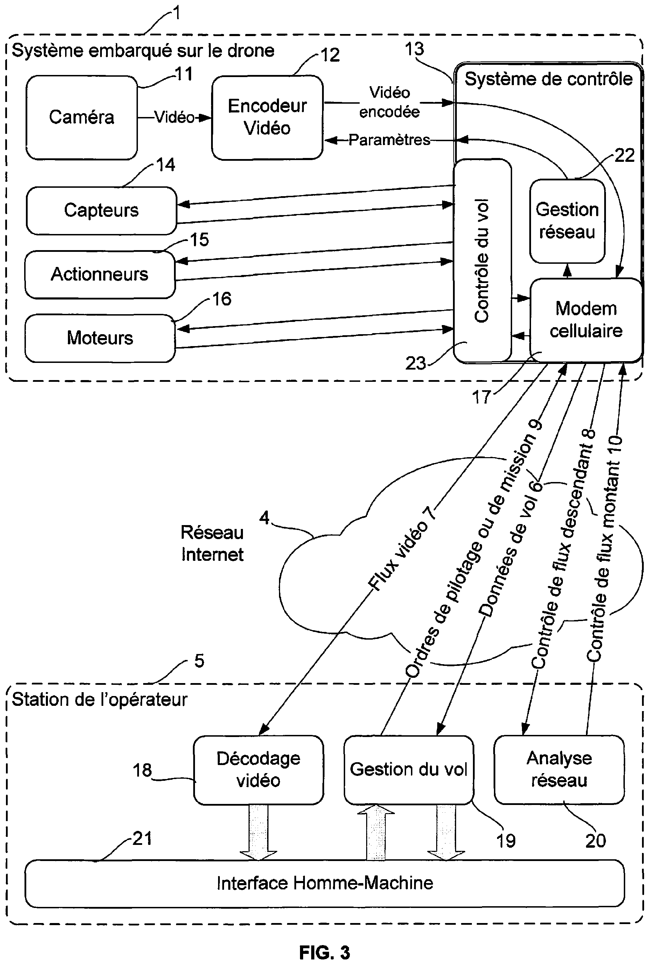

En référence maintenant aux Figures 2 et 3, le dispositif selon la présente invention comporte, au sein du système embarqué sur le drone 1, une caméra 11 ainsi que des moyens d'encodage vidéo (codec) 12. Un exemple typique de codec vidéo utilisé est le format H.264 décrit par la norme ISO/CEI 14496-10. Selon les variantes de réalisation, un format différent peut être utilisé tel que les formats H.262, H.263, H.264, H.265, VP6, VP7, VP8, VP9 ou d'autres formats. Le rôle de cet encodage est de transporter l'image dans un format nécessitant moins de bande passante qu'un flux vidéo brut.

Il est possible à tout moment de faire varier les paramètres de l'encodeur vidéo 12 tels que la définition de l'image demandée (taille en pixels), le nombre d'images par seconde, ou encore le débit binaire (bit rate) du flux vidéo en sortie de l'encodeur. Il est par ailleurs possible de faire varier d'autres paramètres spécifiques au format d'encodage utilisé.

Dans ce dispositif, la caméra 11 fournit donc un flux vidéo à l'encodeur 12, lequel peut être matériel (puce électronique) ou constitué d'un bloc logiciel dans un ensemble plus important. Cet encodeur 12 fournit un flux vidéo encodé à un système de contrôle 13, lequel est en charge de mettre à disposition ce flux sur le réseau Internet. La connectivité Internet du système de contrôle 13 est obtenue par l'usage d'un modem cellulaire 17 capable de fournir une connexion Internet en utilisant les réseaux de télécommunications mobiles 2G, 3G, 3G+, H+, 4G, LTE, LTE-Advanced, 5G, WiMAX ou autres.

Le flux vidéo est ainsi transmis au moyen d'Internet en utilisant différents protocoles de transmission de flux. Ces protocoles peuvent être utilisés de manière imbriquée, selon les couches du modèle OSI (« Open Systems Interconnection » en terminologie anglo-saxonne). Il est donc possible d'utiliser, par exemple, les protocoles UDP ou TCP pour les couches de plus bas niveau. Pour les couches de niveau supérieur, on trouve dans l'état de l'art actuel plusieurs protocoles adaptés à la transmission de flux vidéo. On trouve par exemple les protocoles RTP (Real-Time Transport Protocol), RTSP (Real-Time Streaming Protocol), HLS (HTTP Live Streaming), RTMP (Real-Time Messaging Protocol), MPEG-DASH (Dynamic Adaptative Streaming over HTTP), HSS (Microsoft HTTP Smooth Streaming), ou tout autre protocole de transmission de flux de la couche Application du modèle OSI.

Ce flux est transmis à la station 5 de l'opérateur via le réseau Internet 4 au moyen d'un de ces protocoles, et est interprété et décodé au niveau d'un décodeur 18 afin d'être mis à disposition de l'opérateur dans une interface homme-machine 21.

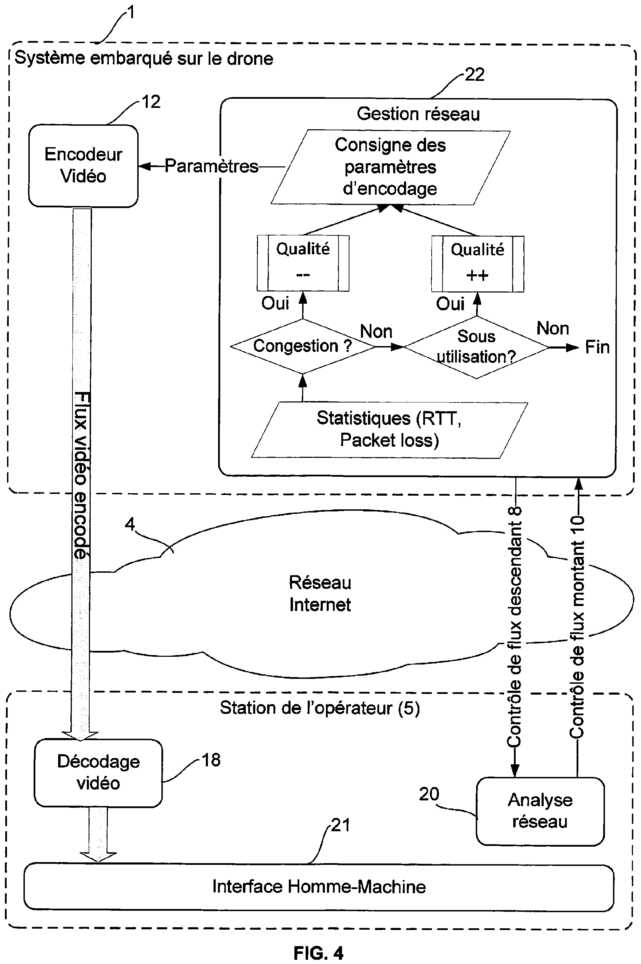

Le problème de la congestion du réseau est résolu par l'utilisation d'un moyen d'adaptation de l'encodage vidéo en fonction de la capacité du réseau, comme illustré sur la Figure 4. Un système logiciel ou module de gestion du réseau 22 sur le système embarqué dans le drone 1 émet à intervalles déterminés, fixes ou variables suivant certaines conditions, des paquets comportant des statistiques sur les flux générés à bord du drone, notamment le flux vidéo 7 ou le flux de données du vol 6 (flux illustrés sur la Figure 2). Ces paquets contiennent également des statistiques sur l'utilisation du réseau, calculées par le module logiciel de gestion du réseau 22 à partir de paquets similaires envoyés cette fois par la station de l'opérateur au sol 5, et plus particulièrement par le module d'analyse du lien réseau 20. Les deux modules logiciels 20 et 22 interagissent de manière à calculer des statistiques sur l'utilisation du réseau dans le sens montant 10 ou dans le sens descendant 8.

Ces statistiques comprennent par exemple la donnée dite du RTT (« Round-Trip delay Time » en terminologie anglo-saxonne), c'est-à-dire le temps de trajet d'un paquet sur le réseau, ou encore le nombre de paquets et/ou d'octets transmis, la gigue, c'est-à-dire la variation du temps de latence (« jitter » en terminologie anglo-saxonne). Par ailleurs, les modules 20 et 22 sont aptes à calculer le nombre de paquets perdus (packet loss).

Il existe à l'heure actuelle différentes technologies permettant de déduire de l'envoi de paquets de contrôle 8 et 10 ces différentes statistiques. La présente invention utilise principalement le protocole RTCP (Real-Time Control Protocol), qui peut être utilisé en combinaison avec le protocole RTP (Real-Time Transport Protocol), et peut, selon d'autres variantes de réalisation, utiliser tout autre moyen de déduire ces statistiques.

L'ensemble de ces données statistiques permet de détecter un phénomène de congestion du à une surestimation du débit binaire admissible sur le lien réseau. En cas d'apparition d'un tel phénomène, le module de gestion du réseau 22 fournit à l'encodeur vidéo 12 de nouveaux paramètres d'encodage, dans le sens d'une réduction du débit binaire de la vidéo encodée en sortie de l'encodeur 12, voire, selon la sévérité du phénomène de congestion, dans le sens d'une réduction de la définition de l'image. Une boucle de rétroaction est ainsi formée. L'analyse des données fournies par les modules 20 et 22 permet également de détecter une potentielle sous-utilisation du lien réseau. Le module de gestion du lien réseau 22 envoie alors à l'encodeur vidéo 12 de nouveaux paramètres d'encodage dans le sens d'une augmentation du débit binaire de la vidéo encodée, afin d'augmenter autant que possible la qualité de la vidéo transmise.

Dans le cas où il serait difficile de prévoir cette sous-utilisation du réseau, la commande de débit binaire effectuée auprès de l'encodeur vidéo 12 est arbitrairement augmentée suivant un intervalle de temps donné, de par exemple cinq secondes. La rétroaction mise en place pourra alors ajuster le débit binaire à une valeur pour laquelle le phénomène de congestion n'apparaît pas. Ce système peut, selon une variante de réalisation, être mis en œuvre pour tout flux d'information entre le drone 1 et son opérateur 5.

Le système d'analyse du lien réseau, mis en place grâce aux modules 20 et 22, par transmission de flux de contrôle 8 et 10, permet également de réserver une partie de la bande passante disponible pour la transmission des données de vol 6 entre le système de contrôle embarqué 13 et la station de l'opérateur 5. Dans la pratique, le débit nécessaire à la transmission de ces données de vol est très petit (de l'ordre de 10%) devant le débit nécessaire à la transmission d'un flux vidéo de qualité, qui est de l'ordre de 1 Mégabit par seconde. De même, le module d'analyse du lien réseau 20 permet d'assurer la priorité de la transmission des ordres de pilotage ou de mission 9 devant celle de tout autre donnée sur le lien réseau mis en place, notamment les paquets destinés à assurer le contrôle de flux 10.

Dans une forme de réalisation préférée, le système effectue une mesure périodique des statistiques liées à l'utilisation du réseau parmi lesquelles figurent :
- La latence,
- Le taux de paquets reçus désordonnés,
- Le taux de paquets non-reçus,
- Le taux de paquets reçus non intègres.

Ces valeurs sont fournies par l'utilisation combinée des protocoles RTP (Real Time Protocol) et RTCP (Real-time Transport Control Protocol). La mesure des statistiques ne concerne qu'un échantillon de temps réduit afin de détecter au plus rapidement une variation dans ces paramètres. Le système embarqué au sein du drone associe à chaque opérateur (système au sol 5) auquel il est connecté une note qui est une moyenne pondérée des paramètres évoqués ci-dessus. Si cette note est inférieure à seuil donné (seuil d'invalidité) alors la connexion est considérée comme non-valable et les ordres de pilotage en provenance de l'opérateur concerné ne seront pas exécutés par le véhicule, qui peut alors mettre en œuvre un processus de mise en sécurité (retour automatique, etc.).

Un autre problème auquel un tel système de la présente invention doit faire face est la grande variabilité des complexités des topologies de réseaux informatiques rencontrées aux différents points d'accès au réseau Internet. La complexité des réseaux informatiques peut être telle que l'établissement d'une connexion de pair à pair entre le drone 1 et la station 5 de l'opérateur peut être impossible. C'est notamment le cas lorsque les opérateurs fournissant les accès au réseau Internet par l'intermédiaire d'infrastructures 2G, 3G, 3G+, H+, 4G, LTE, LTE-Advanced, 5G, WiMAX, utilisent des dispositifs de type « pare-feu » ou NAT (pour « Network Address Translation » en terminologie anglo-saxonne). Or ces dispositifs sont largement utilisés dans les routeurs répartis en différents points des réseaux et restreignent l'accessibilité ou la visibilité d'un point de terminaison d'un réseau (pair) par un autre pair.

En d'autres termes, contrairement à l'utilisation d'un réseau de type WiFi entre drone et station au sol, rendant possible l'utilisation d'adresses réseau statiques, les adresses réseau du drone 1 et de la station au sol 5 ne sont pas connues avant que la connexion ne soit établie, et sont susceptibles de changer de manière dynamique.

L'utilisation des réseaux cellulaires selon l'invention nécessite donc la mise en place d'une phase d'initialisation de la communication afin que les parties communicantes s'échangent diverses informations utiles à la connexion telles que les adresses réseaux ou encore le type d'architecture réseau détecté.

La présente invention résout le problème de l'établissement et du maintien de la connexion au travers de différentes topologies de réseaux informatiques au moyen de techniques dites de « traversée de NAT ». Ces techniques sont mises en place au sein des modules d'analyse de lien réseau 20 et 22 et sont basées sur l'usage de protocoles des réseaux tels que ICE (« Interactive Connectivity Establishment » en terminologie anglo-saxonne) spécification RFC 5245. Ces protocoles peuvent eux même faire appel à d'autres protocoles tels que STUN (« Session Traversai Utilities for NAT » en terminologie anglo-saxonne) spécification RFC 5389, pour la détection de la topologie du réseau, ou encore TURN (« Traversai Using Relays around NAT » en terminologie anglo-saxonne) spécifications RFC 5766 et 6156, pour le contournement des « NAT » par l'intermédiaire d'un serveur jouant le rôle de relais.

De nombreux autres protocoles peuvent également être utilisés pour résoudre ces problèmes et l'état de l'art en ce domaine est destiné à évoluer avec le déploiement progressif du système IPv6 (Internet Protocol version 6). L'usage individuel et combiné de ces différentes techniques permet au drone 1 et à la station 5 de l'opérateur de pouvoir établir une communication bidirectionnelle quelle que soit la topologie de réseau rencontrée.

Dans une forme de réalisation préférée, le procédé pour maintenir la liaison entre drone et station au sol consiste en l'utilisation combinée des protocoles STUN, TURN et SIP. Le protocole SIP (Session Initiation Protocol) est utilisé pour établir et superviser une session entre le drone et son opérateur. Cette session est constituée de différents flux multimédias parmi lesquels figure le flux du télémétrie ou encore les flux vidéo.

Le protocole SIP a été conçu afin de superviser des flux multimédias de type VoIP (« Voice over IP » en terminologie-anglo-saxonne) dans lesquels les différentes parties communicantes ont des rôles parfaitement symétriques, et a l'avantage de bien gérer les latences afin d'éviter les décalages de voix. Le procédé préféré consiste à inclure dans les messages SIP des informations permettant de distinguer les rôles des entités émettrices et réceptrices afin de différencier les drones et les opérateurs. Préférentiellement, chaque partie indique également dans les messages SIP quels sont les droits qu'elle alloue à la partie distante.

Par ailleurs, contrairement au cas d'une liaison drone-station au sol par réseau local, il est possible selon l'invention de permettre à un ensemble d'opérateurs au sol de connecter leur station au sol respective 5 à un même drone. Ces opérateurs peuvent se voir attribuer des droits qui peuvent différer de manière dynamique parmi lesquels figurent le contrôle de l'engin ou encore le contrôle d'une caméra donnée.

Dans ce cas, le seuil d'invalidité mentionné plus haut ainsi que les coefficients utilisés lors de la pondération dépendent avantageusement de la nature de l'opérateur et des droits qui lui sont associés, de telle sorte que la latence maximale acceptable diffère selon que le drone évolue en mode automatique (mission autonome), semi-automatique (« Click & Go ») ou en mode manuel (utilisation d'un joystick pour pilotage temps réel).

Par ailleurs, dans le cas où plusieurs stations au sol sont en communication avec le drone, il est possible selon un aspect de l'invention (et contrairement à une liaison point à point unique dans le cas d'un réseau local) d'effectuer un arbitrage au niveau du routage entre les différentes commandes de vol. Ainsi le système met avantageusement en œuvre un procédé d'arbitrage entre les différentes commandes de vols qui associe à chaque commande une criticité qui peut être au choix :
- Une criticité temps réel : le message doit être acheminé le plus rapidement possible, mais la perte du message n'est pas critique ;
- Une criticité acheminement : le message doit absolument être acheminé, mais le temps de d'acheminement du message n'est pas critique.

Le routage diffère selon la criticité retenue. Les messages marqués « temps réel » sont alors acheminés au moyen du protocole de transport UDP (User Datagram Protocol) en liaison point à point (Peer to Peer) tandis que les messages marqués « acheminement » sont acheminés au moyen du protocole TCP (Transmission Control Protocol) via l'utilisation d'un serveur intermédiaire idéalement placé dans le réseau afin de palier à tout problème lié à la traversée des NAT transversales qui sont des infrastructures incontournables dans les réseaux cellulaires commerciaux.

De la sorte, le temps d'acheminement des messages « temps réel » est minimal. De même le logiciel client côté station au sol est notifié de l'état d'acheminement des messages marqués avec la criticité « acheminement ».

Typiquement, les commandes vols associés à des phases de vols autonomes sont ainsi envoyés avec la priorité « acheminement », tandis que l'ensemble des commandes associés au contrôle manuel du véhicule sont envoyés en criticité « temps réel ».

A nouveau en référence à la Figure 3, au sein du système embarqué sur le drone 1, différents capteurs 14 permettent l'analyse du vol. Parmi ces capteurs, on peut par exemple trouver une centrale à inertie, des gyroscopes, accéléromètres, magnétomètres, récepteurs de localisation GPS, GNSS ou Galileo. Ces capteurs transmettent leurs mesures au système de contrôle 13, et plus particulièrement à un système 23 dédié au contrôle du vol. Ce système, en fonction des ordres de pilotage ou de mission 9 reçus, commande différents actionneurs 15 tels que des servomoteurs, des relais, etc. ; ainsi que les moyens de propulsion du drone 16 de telle sorte que les données issues des capteurs 14 sont en accord avec la consigne déduite des ordres de pilotage ou de mission 9.

L'interface homme-machine 21 de la station au sol 5 permet enfin à l'opérateur d'avoir accès à toutes les données nécessaires à ses prises de décisions. Il peut ainsi piloter le drone en envoyant des ordres de pilotage ou de mission 9 par l'intermédiaire d'un système de gestion du vol 19 doté de différentes fonctionnalités telles que le décodage des données de vol 6 issues du système embarqué sur le drone 1 et la traduction des intentions de l'opérateur en ordres de pilotage ou de mission 9 compréhensibles par le système embarqué sur le drone 1.

L'ensemble de la station 5 de l'opérateur peut être, selon une variante de réalisation, externalisée sur un serveur connecté au réseau Internet 4. L'interface homme-machine 21 est alors présente sur ce serveur, et l'accès s'y effectue au moyen d'une application Internet. L'opérateur peut ainsi piloter le drone, gérer les missions, avoir accès au flux vidéo ainsi qu'aux autres flux d'information tels que les informations de vol du drone 1 directement depuis un navigateur Web en lien avec le serveur. Cette variante de réalisation présente l'avantage important de la portabilité du système. En effet, il n'existe pas le besoin d'installer sur l'ordinateur de l'opérateur un quelconque logiciel assurant le fonctionnement de la station de l'opérateur 5. Cette interface Web peut être utilisée depuis un quelconque périphérique connecté au réseau Internet 4, qu'il s'agisse d'un ordinateur de bureau, d'un ordinateur portable, d'un téléphone mobile, ou d'une tablette.

Bien entendu, la présente invention n'est nullement limitée à la forme de réalisation décrite et représentée. En particulier, le présent mémoire couvre toute combinaison nouvelle de moyens réalisable par l'homme du métier sur la base dudit mémoire à l'aide de ses connaissances générales, indépendamment du libellé des revendications annexées.

## Revendications

1. Système de transmission de commandes et d'un flux vidéo entre un engin (1) télé-piloté tel qu'un drone et une station au sol (5), **caractérisé en ce qu'**il comprend une liaison bidirectionnelle (3, 4) entre engin et station au sol, mettant au moins en partie en œuvre un réseau de communication cellulaire (3), ladite liaison bidirectionnelle étant assurée au moyen d'un modem cellulaire (2, 17) côté engin et véhiculant d'une part un flux vidéo compressé (7) engendré par une caméra (11) et un module d'encodage vidéo (12), et d'autre part des informations appartenant à un groupe comprenant des ordres de commande de déplacement (9) et des données de vol ou caractéristiques du pilotage de l'engin télé-piloté (6), le système comprenant en outre des moyens (20, 22) de gestion de la liaison bidirectionnelle aptes à assurer un maintien de ladite liaison en tenant compte de la variabilité de topologie et de performances de la liaison induite par la mise en œuvre du réseau de communication cellulaire.

2. Le système de la revendication 1, dans lequel l'engin et la station au sol communiquent sur la liaison bidirectionnelle via un protocole par paquets.

3. Le système de la revendication 1 ou 2, dans lequel les moyens de gestion de la liaison sont aptes à réaliser une adaptation du débit binaire du flux vidéo compressé par ajustement des paramètres d'encodage du flux vidéo en fonction d'une mesure de la bande passante de la liaison bidirectionnelle de l'engin vers la station.

4. Le système de la revendication 3, dans lequel, en l'absence d'une mesure fiable de la bande passante, ladite adaptation est réalisée en faisant varier de façon répétée les paramètres d'encodage pour augmenter progressivement le débit binaire du flux vidéo compressé et en ajustant les paramètres d'encodage pour obtenir un débit binaire légèrement inférieur à un débit qui causerait un phénomène de congestion.

5. Le système de la revendication 3 ou 4, dans lequel ladite adaptation est réalisée en réservant une portion incompressible de la bande passante disponible à l'acheminement d'informations critiques.

6. Le système selon la revendication 5, dans lequel les informations critiques appartiennent à un groupe comprenant des données de vol, des caractéristiques du pilotage de l'engin télé-piloté et des ordres de pilotage ou de mission (9).

7. Le système de l'une des revendications 1 à 6, dans lequel lesdits moyens de gestion de la liaison sont aptes à calculer une note de qualité de la liaison bidirectionnelle au moins de la station vers l'engin, et neutraliser des instructions de vol reçues dans le cas où ladite note est inférieure à un seuil.

8. Le système des revendications 2 et 7 prises en combinaison, dans lequel ladite note est établie en fonction d'au moins deux mesures de caractéristiques de la liaison parmi la latence, le taux de paquets reçus dans le désordre, le taux de paquets non reçus et le taux de paquets et le taux de paquets reçus non intègres.

9. Le système de l'une des revendications 1 à 8, dans lequel lesdits moyens de gestion de la liaison bidirectionnelle comprennent la mise en œuvre d'un moins un protocole d'établissement de session et d'au moins un protocole de traversée ou de contournement de NAT.

10. Le système selon la revendication 9, dans lequel les moyens de gestion de la liaison sont aptes à inclure dans les messages du protocole d'établissement de session des informations relatives au type de point connecté, à savoir engin ou station au sol.

11. Le système selon la revendication 10, dans lequel les moyens de gestion de la liaison sont aptes à inclure dans les messages du protocole d'établissement de session des informations relatives à des droits d'une station au sol sur un engin.

12. Le système selon la revendication 11, dans lequel lesdits droits comprennent des droits de commande du déplacement de l'engin et des droits de commande de la caméra de l'engin.

13. Ensemble d'un engin télé-piloté tel qu'un drone et d'une station au sol, **caractérisé en ce qu'**il comprend un système de transmission selon l'une des revendications 1 à 12.

14. Ensemble selon la revendication 13, lequel comprend en outre au moins une deuxième station au sol, une deuxième liaison bidirectionnelle (3, 4) entre engin et station au sol, mettant au moins en partie en œuvre un réseau de communication cellulaire (3), et des deuxièmes moyens de gestion de la deuxième liaison bidirectionnelle entre la deuxième station au sol et l'engin, et dans lequel les premiers et deuxièmes moyens de gestion des liaisons bidirectionnelles sont aptes à véhiculer des informations de droits respectifs des deux stations au sol vis-à-vis dudit engin.

15. Ensemble selon la revendication 13 ou 14, dans lequel les premiers et deuxièmes moyens de gestion des liaisons bidirectionnelles sont aptes à router des instructions critiques du sol vers l'engin via la première liaison bidirectionnelle ou la deuxième liaison bidirectionnelle en fonction d'un type de criticité, à savoir criticité temporelle ou criticité d'acheminement.

## Patentansprüche

1. System zur Übertragung von Befehlen und einem Videostream zwischen einem ferngesteuerten Apparat (1), wie beispielsweise einer Drohne, und einer Bodenstation (5), **dadurch gekennzeichnet, dass** es eine bidirektionale Verbindung (3, 4) zwischen dem Apparat und der Bodenstation umfasst, wobei zumindest teilweise ein zellulares Kommunikationsnetz (3) implementiert ist, wobei die bidirektionale Verbindung mittels eines apparateseitigen zellularen Modems (2, 17) bereitgestellt ist und einerseits einen komprimierten Videostream (7), der von einer Kamera (11) und einem Videocodierungsmodul (12) erzeugt wird, und andererseits Informationen, die zu einer Gruppe gehören, die Bewegungssteuerbefehle (9) und Flugdaten oder Steuerungseigenschaften des ferngesteuerten Apparats (6) umfasst, überträgt, wobei das System ferner Mittel (20, 22) zum Verwalten der bidirektionalen Verbindung umfasst, die in der Lage sind, die Verbindung unter Berücksichtigung der Variabilität der Topologie und der Verbindungsleistungen, induziert durch die Implementierung des zellularen Kommunikationsnetzes, aufrechtzuerhalten.

2. System nach Anspruch 1, wobei der Apparat und die Bodenstation über die bidirektionale Verbindung über ein Paketprotokoll kommunizieren.

3. System nach Anspruch 1 oder 2, wobei die Verbindungsverwaltungsmittel in der Lage sind, eine Anpassung der Bitrate des komprimierten Videodatenstreams durch Einstellen der Codierparameter des Videostreams in Abhängigkeit von einem Maß der Bandbreite der bidirektionalen Verbindung des Apparats zur Station vorzunehmen.

4. System nach Anspruch 3, wobei bei Fehlen eines zuverlässigen Maßes der Bandbreite die Anpassung durch wiederholtes Variieren der Codierparameter, um allmählich die Bitrate des komprimierten Videostreams zu erhöhen, und durch Anpassen der Codierparameter, um eine Bitrate zu erhalten, die etwas niedriger ist als eine Rate, die ein Überlastungsphänomen verursachen würde, durchgeführt wird.

5. System nach Anspruch 3 oder 4, wobei die Anpassung durch Reservieren eines nicht komprimierbaren Teils der Bandbreite für die Übertragung von kritischen Informationen erfolgt.

6. System nach Anspruch 5, wobei die kritischen Informationen zu einer Gruppe gehören, die Flugdaten, Steuerungseigenschaften des ferngesteuerten Apparats und Steuerungs- oder Einsatzbefehle (9) umfasst.

7. System nach einem der Ansprüche 1 bis 6, wobei die Verbindungsverwaltungsmittel in der Lage sind, eine Bewertung zur Qualität der bidirektionalen Verbindung zumindest von der Station zum Apparat zu berechnen und empfangene Fluganweisungen aufzuheben, falls die Bewertung einen Schwellenwert unterschreitet.

8. System nach den Ansprüchen 2 und 7 in Kombination, wobei die Bewertung in Abhängigkeit von mindestens zwei Messungen von Eigenschaften der Verbindung von der Latenzzeit, der Rate der Pakete, die außerhalb der Reihenfolge empfangen wurden, der Rate der nicht empfangenen Pakete und der Rate der Pakete und der Rate der empfangenen Pakete, die nicht integriert sind, erstellt wird.

9. System nach einem der Ansprüche 1 bis 8, wobei die bidirektionalen Verbindungsverwaltungsmittel die Umsetzung von mindestens einem Sitzungsaufbauprotokoll und mindestens einem NAT-Durchgangsprotokoll oder-Umgehungsprotokoll umfassen.

10. System nach Anspruch 9, wobei die Verbindungsverwaltungsmittel in der Lage sind, Informationen in den Nachrichten des Sitzungsaufbauprotokolls einzuschließen, die den Typ des Verbindungspunktes betreffen, nämlich Apparat oder Bodenstation.

11. System nach Anspruch 10, wobei die Verbindungsverwaltungsmittel in der Lage sind, Informationen in den Nachrichten des Sitzungsaufbauprotokolls einzuschließen, die Rechte einer Bodenstation an einem Apparat betreffen.

12. System nach Anspruch 11, wobei die Rechte Steuerungsrechte zum Bewegen des Apparats und Steuerungsrechte für die Kamera des Apparats umfassen.

13. Aufbau eines ferngesteuerten Apparats wie einer Drohne und einer Bodenstation, **dadurch gekennzeichnet, dass** er ein Übertragungssystem nach einem der Ansprüche 1 bis 12 umfasst.

14. Aufbau nach Anspruch 13, der ferner mindestens eine zweite Bodenstation, eine zweite bidirektionale Verbindung (3, 4) zwischen dem Apparat und der Bodenstation, die zumindest teilweise ein zellulares Kommunikationsnetz implementiert (3), und zweite Mittel zum Verwalten der zweiten bidirektionalen Verbindung zwischen der zweiten Bodenstation und dem Apparat umfasst, und wobei die ersten und zweiten bidirektionalen Verbindungsverwaltungsmittel in der Lage sind, jeweilige Rechteinformationen der beiden Bodenstationen an dem Apparat zu übertragen.

15. Aufbau nach Anspruch 13 oder 14, wobei die ersten und zweiten bidirektionalen Verbindungsverwaltungsmittel in der Lage sind, kritische Anweisungen in Abhängigkeit von dem Typ der Kritikalität, nämlich der zeitlichen Kritikalität oder der Routing-Kritikalität, über die erste bidirektionale Verbindung oder die zweite bidirektionale Verbindung vom Boden zu dem Apparat zu leiten.

## Claims

1. A system for transmitting commands and a video stream between a remote-controlled craft (1) such as a drone and a ground station (5), **characterized in that** it comprises a bidirectional link (3, 4) between craft and ground station, at least partly implementing a cellular communication network (3), said bidirectional link being ensured by means of a cellular modem (2, 17) on the craft side and conveying, on the one hand, a compressed video stream (7) generated by a camera (11) and a video encoding module (12), and, on the other hand, information belonging to a group comprising movement control commands (9) and flight data or piloting characteristics of the remote-controlled craft (6), the system further comprising means (20, 22) for managing the bidirectional link capable of ensuring that said link is maintained while taking account of the variability of topology and of performance levels of the link induced by the implementation of the cellular communication network.

2. The system of claim 1, wherein the craft and the ground station communicate over the bidirectional link via a packet-based protocol.

3. The system of claim 1 or 2, wherein the link management means are capable of performing an adaptation of the bit rate of the compressed video stream by adjusting the encoding parameters of the video stream as a function of a measurement of the bandwidth of the bidirectional link from the craft to the station.

4. The system of claim 3, wherein, in the absence of a reliable measurement of the bandwidth, said adaptation is performed by repeatedly varying the encoding parameters to progressively increase the bit rate of the compressed video stream and by adjusting the encoding parameters to obtain a bit rate slightly lower than a rate which would cause a congestion phenomenon.

5. The system of claim 3 or 4, wherein said adaptation is performed by reserving an incompressible portion of the available bandwidth for the routing of critical information.

6. The system as claimed in claim 5, wherein the critical information belong to a group comprising flight data, characteristics of the piloting of the remote-controlled craft and piloting or mission instructions (9).

7. The system of one of claims 1 to 6, wherein said link management means are capable of computing a quality score of the bidirectional link at least from the station to the craft, and of neutralizing flight instructions received in the case where said score is below a threshold.

8. The system of claims 2 and 7 taken in combination, wherein said score is established as a function of at least two measurements of characteristics of the link among the latency, the rate of packets received in disorder, the rate of packets not received and the rate of packets received incomplete.

9. The system of one of claims 1 to 8, wherein said bidirectional link management means comprise the implementation of at least one session establishment protocol and of at least one NAT traversal or bypass protocol.

10. The system as claimed in claim 9, wherein the link management means are capable of including in the messages of the session establishment protocol information relating to the type of point connected, namely craft or ground station.

11. The system as claimed in claim 10, wherein the link management means are capable of including in the messages of the session establishment protocol information relating to rights of a ground station over a craft.

12. The system as claimed in claim 11, wherein said rights comprise rights to control the movement of the craft and rights to control the camera of the craft.

13. A set of a remote-controlled craft such as a drone and a ground station, **characterized in that** it comprises a transmission system according to one of claims 1 to 12.

14. The set according to claim 13, which further comprises at least one second ground station, one second bidirectional link (3, 4) between craft and ground station, at least partly implementing a cellular communication network (3), and second means for managing the second bidirectional link between the second ground station and the craft, and wherein the first and second bidirectional link management means are capable of conveying information on respective rights of the two ground stations with respect to said craft.

15. The set according to claim 13 or 14, in which the first and second bidirectional link management means are capable of routing critical instructions from the ground to the craft via the first bidirectional link or the second bidirectional link as a function of a type of criticality, namely temporal criticality or routing criticality.
